(19) Europäisches Patentamt
European Patent Office
Office européen des brevets

(11) Publication number: 0 324 608 A2

# (12) EUROPEAN PATENT APPLICATION

(21) Application number: 89300245.1

(22) Date of filing: 12.01.89

(51) Int. Cl.[4]: C 08 G 63/60

(30) Priority: 12.01.88 IT 1903888

(43) Date of publication of application: 19.07.89 Bulletin 89/29

(84) Designated Contracting States: AT BE CH DE ES FR GB LI NL SE

(71) Applicant: Montedison S.p.A.
31, Foro Buonaparte
I-20121 Milan (IT)

(72) Inventor: Coassolo, Alfredo
34 Via Gorizia
I-28100 Novara (IT)

Sabarino, Giampiero
9 Via Frova
I-13100 Vercelli (IT)

Foa', Marco
19, Via del Sabbione
I-28100 Novara (IT)

Chapoy, Lawrence L.
60 Via Davicini
I-28040 Lesa Novara (IT)

(74) Representative: Lamb, John Baxter et al
MARKS & CLERK 57/60 Lincoln's Inn Fields
London WC2A 3LS (GB)

## (54) Thermotropic liquid crystalline aromatic polyesters.

(57) Thermotropic liquid crystalline aromatic polymers comprise:-

Thermotropic liquid crystalline aromatic polyesters comprising:

(a) units derived from one or more essentially disubstituted diphenols of the formula:

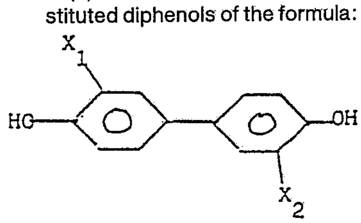

(1)

(wherein $X_1$ and $X_2$ are the same or different and each is a halogen atom, a $C_1$-$C_6$ alkyl group, an aralkyl group containing at least 7 carbon atoms, or a $C_6$-$C_{12}$ cycloalkyl group; and

(b) units derived from one or more dicarboxylic acids of the formula:

$HOOC - R_1 - COOH$ (2)

(wherein $R_1$ is a cycloalkyl group, or a simple, double or condensed aryl group containing from 6 to 18 carbon atoms optionally substituted within insert substitutents); and, optionally,

(c) units derived from one or more hydroxyacids of the formula:

$HO - AR_1 (CH=CH) - COOH$ (3)

(wherein $Ar_1$ is a simple, double or condensed aryl group containing from 6 to 18 carbon atoms and optionally substituted inert substitutents, and n is zero or 1); and/or

(d) units derived from diphenols of the formula:

$HO-Ar_2-OH$ (4)

(wherein $Ar_2$ is a simple or condensed aryl group containing from 6 to 18 carbon atoms, optionally substituted by at least one group $X_1$ or $X_2$ as defined above); and/or

(e) units derived from one or more diphenols of the formula:

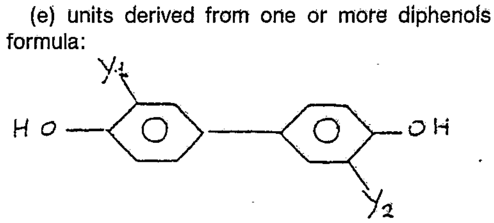

(5)

wherein $Y_1$ and $Y_2$ are the same or different and each is a hydrogen atom or an $C_6$-$C_{12}$ aryl group).



EP 0 324 608 A2

**Description**

## THERMOTROPIC LIQUID CRYSTALLINE AROMATIC POLYESTERS

The present invention relates to thermotropic liquid crystalline aromatic polyesters. More particularly, the invention relates to thermotropic liquid crystalline aromatic polyesters which are easily proccessable in the molten state and have a mesogen group in the main chain.

Thermotropic polyesters having optical anisotropy in the molten state are known products are described, for example, in British Polymer Journal (December 1980), page 154; Journal of Macromolecular Science-Chemistry (1984), page 1705; Die Augewandte Makromolekulare Chemic (1982), 109-110 page 1; Die Augewandte Makromolekulare Chemie (1986), 145-146, page 231; and Journal of Molecular Science Review (1986) C26(4), page 551.

The use of these polyesters makes it possible toobtain fibres or moulded manufactured articles, for instance by injection moulding, having suitable rigidity, hardness and thoughness.

Generally, the polymers having the above characteristics are easily processable in the molten state, highly resistant to heat and oxidation and furthermore, because of their crystallinity, the polymers have a high HDT (Heat Distortion Temperature) and resistance to solvents.

Polymers which can be obtained by the polycondensation of terephthalic acid and 4,4′-dihydroxydiphenyl melt at temperatures too high to be easily processed. The melting point may be reduced by using more substituents on the aromatic rings of the diphenol or terephthalic acid or by modifying the polymer by the addition of other comonomers.

US-A-3,637,595 describes the preparation of thermotropic liquid crystalline polyesters by the polycondensation of 4,4′-dihydroxydiphenyl, terephthalic acid and p-hydroxybenzoic acid. The resultant polymer, although it has high mechanical characteristics and resistance to oxidation and solvents, has a high melting point, above 420° C, and therefore it is processable only with difficulty or, at any rate, requires unconventional apparatus for injection moulding.

In US-A-3,975,487 the above drawback is partially overcome by using bent comonomers, such as isophthalic acid, the presence of which however, if in high quantities, can lead to the destruction of the liquid crystalline properties of the finished polymer.

In Journal of Polymer Science : Polymer Physics Edition, vol 21, 119, the preparation of polyesters starting from 4,4′-dihydroxydiphenyl and various aliphatic diacids is described. However, these polymers, because of the presence of compounds having aliphatic chains, do not show interesting physico-mechanical properties.

US-A-4,617,370 describes the preparation of liquid crystalline polymer starting from 4,4′-dihydroxydiphenyl, substituted in the 3,3′,5,5′ positions with phenyl or lower alkyl or alkoxy radicals and substituted in at least one of the 2,2′, 6 or 6′ positions with halogen. This monomeric unit is reacted with a dicarboxylic aromatic acid and the resulting polymer has a melting point of 270 to 350° C. However, it is only possible to obtain a polymer having liquid crystalline properties if a hydroxyaromatic acid is used in the polymerization mixture, otherwise the polymer obtained has an isotropic molten state.

In EP-A-201,831 there are described thermotropic liquid crystalline polyesters obtained by the polycondensation of a dicarboxylic aromatic acid of 4,4′-dihydroxyphenyl substituted in the 3,3′-positions by two phenyl groups.

Therefore, on the basis of what is described in the literature, it would seem 4,4′-dihydroxyphenyl can be used for the preparation of thermotropic liquid crystalline polyesters either in the non-substituted form together with other comonomers, or in the substituted form selecting suitable substituents groups.

It has now been found that polyesters obtained starting from 4,4′-dihydroxydiphenyls substituted in the 3,3′-positions by halogen atoms or by alkyl or aralkyl radicals, may be thermotropic liquid crystalline polyesters.

Accordingly the invention provides thermotropic liquid crystalline aromatic polyesters comprising:

(a) units derived from one or more essentially disubstituted diphenols of the formula:

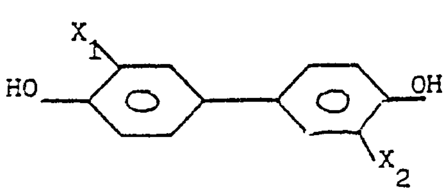

(1)

(wherein $X_1$ and $X_2$ are the same or different and each is a halogen atom, a $C_1$-$C_6$ alkyl group; an aralkyl group containing at least 7 carbon atoms, preferably from 7 to 15 carbon atoms, or a cycloalkyl group containing from 6 to 12 carbon atoms); and

(b) units derived from one or more dicarboxylic acids of the formula:

$HOOC-R_1-COOH$ (2)

(wherein $R_1$ is a cycloalkyl radical or a simple, double or condensed aryl group containing from 6 to 18

carbon atoms, optionally substituted by groups inert under the reaction conditions such as halogen atoms or lower alkyl groups); and, optionally,

(c) units derived from one or more hydroxyacids of the formula:

$HO\text{-}Ar_1\text{-}(CH=CH)_n\text{-}COOH$ (3)

wherein $Ar_1$ represents a simple, double or condensed aryl group containing from 6 to 18 carbon atoms, optionally substituted by groups inert under the reaction conditions such as halogen atoms or lower alkyl groups, and n is zero or 1); and/or

(d) units derived from one or more diphenols of the formula:

$HO\text{-}Ar_2\text{-}OH$ (4)

(in which $Ar_2$ is a simple or condensed aryl group containing from 6 to 18 carbon atoms, optionally substituted by at least one radical $X_1$ or $X_2$ as defined above); and/or

(e) units derived from diphenols of the formula:

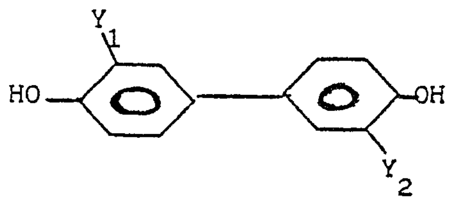

(5)

(wherein $Y_1$ and $Y_2$ are the same or different and each is a hydrogen atom or an aryl radical containing from 6 to 12 carbon atoms).

By the term "lower alkyl groups" as used herein, we mean $C_1$-$C_4$ alkyl groups.

According to a preferred embodiment of the invention, the diphenols of formula (a) are essentially disubstituted; however, mixtures containing mono-substituted derivatives can also be used. In such mixtures, the content of mono-substituted diphenol can vary within wide limits; however, mixtures containing up to 50 mol% of mono-substituted derivatives are those more commonly used.

According to a further preferred embodiment of the invention, at least 90 mol% of the compounds of formulae (2), (3) and (4) have two functional groups such to form a polymeric chain with substantially coaxial or parallel orientation.

Examples of substituted diphenols of formula (1) are 3,3′-dichloro-4,4′-dihydroxydiphenyl, 3,3′-dibromo-4,4′-dihydroxydiphenyl, 3,3′-dimethyl-4,4′-dihydroxydiphenyl, 3,3′-diethyl-4,4′-dihydroxdiyphenyl, 3,3′-di-t.butyl-4,4′-dihydroxydiphenyl, 3,3′-dicyclohexyl-4,4′-dihydroxydiphenyl, 3,3′-diphenylethyl-4,4′-dihydroxydiphenyl and 3,3′-di(1-methyl-1-phenylethyl)-4,4′-dihydroxydiphenyl.

Examples of hydroxyacids of formula (3) are p-hydroxybenzoic acid, 3-chloro-4-hydroxybenzoic acid, 3-bromo-4-hydroxybenzoic acid, 3,5-dichloro-4-hydroxybenzoic acid, 3-methyl-4-hydroxybenzoic acid, 3-methyl-4-hydroxybenzoic acid, 3-t.butyl-4-hydroxybenzoic acid, 4-hydroxy-1-naphthoic acid, the 6-hydroxy-2-naphthoic acid, p-(4-hydroxyphenyl)benzoic acid and p-hydroxycinnamic acid.

Examples of aromatic diols of formula (4) are hydroquinone; methyl-, ethyl-, propyl- and t.-butylhydroquinone; phenylhydroquinone; (1-phenylethyl)-hydroquinone, 2,5-bis(phenylethyl) hydroquinone, 2,5-bis(alpha-phenylisopropyl)hydroquinone; cyclohexylhydroquinone; and 2,6-dihydroxynaphthalene.

Examples of diphenols of formula (5) are 4,4′-dihydroxydiphenyl, 3,3′-diphenyl-4,4′-dihydroxydiphenyl and phenyl 4,4′-dihydroxydiphenyl.

In the polyesters of the invention, the molar ratios d/a and e/a, of units derived from the phenols of formula (d) and (e) to units derived from the diphenols of formula (a), are suitably from 0 to 1; whilst the molar ratio of units derived from hydroxyacids of formula (c) to those derived from the acids of formula (b) are suitably from 0 to 4.

The polymers of the invention are optically anisotropic in the molten state, as can be verified by optical microscopy under polarized light, and suitably have an inherent viscosity, generally measured in a 1:1 mixture of trifluoroacetic acid and methylene chloride at 30°C at a concentration of2.5 g/liutre, of from 0.3 to 4 dl/g. Alternatively, other solvents, such as pentafluorophenol at 60°C, can be used.

The melting temperature of the polyesters may vary within wide limits according to the composition of the polymer and the degree of polymerisation. Generally the melting temperature will be from 200 to 400°C. The molecular weight and crystallinity of the polyester can be increased by heating the polymer particles under an inert environment in vacuo at a temperature just below the melting point, for a time of 1 to 20 hours.

The polyesters of the invention may be used to give shaped articles which may be produced by means of conventional thermoplastic polymer processing techniques such as, for instance, injection or extrusion moulding. They can be processed in film or form; may be used as matrices for composite materials based on fibres or inorganic fillers or may be used in admixture with other polymers.

The polyesters of the invention may be prepared by conventional techniques by reacting the above mentioned starting materials (which are commercially available or which can be easily prepared by usual techniques of organic chemistry) under conventional conditions for the preparation of polyester resins.

Thus, for example, the polyesters can be obtained in the molten state or in the presence of a dispersing agent having a high boiling point (such as diphenylsulphone or mixtures of partially hydrogenated terphenyls), by transesterification between the dicarboxylic aromatic acids and the acetates or propionates of the phenols and optionally of the hydroxyacids, at temperatures of from between 270 and 370°C so as to favour the complete evolution of the aliphatic carboxylic acids, also by working under vacuum. The reaction can optionally be carried out in the presence of a transesterification catalyst such as an alkali metal or alkaline earth metal phosphate. Other catalysts are those generally used in polycondensation processes and described in "Encyclopedia of Polymer Science and Technology" (1969,. vol. 10, page 722-723). Examples of these other catalysts are the oxides, hydroxides, hydrides, halides, alcoholates or phenolates, salts and complex salts of organic or inorganic acids of lithium, sodium, potassium, magnesium, calcium, titanium, manganese, cobalt, zinc, tin, antimony, lanthanum, cerium, lead and germanium. The catalyst is suitably used in an amount of from 0.005 to 1 mole%, 0.01 to 0.2 mole%, based on the total quanitity of the reactants.

In an alternative method, the polyesters can be obtained in solution, by polycondensation between halides of the dicarboxylic aromatic acids and a mixture of phenols in a suitable solvent. The reaction temperature is suitably from 25 to 220°C and the reaction is suitably carried out under nitrogen and/or in the presence of a base to favour the removal of halohydric acid. Among the bases, pyridine is preferred, whilst chlorinated solvents, either aliphatic or aromatic (such as methylene chloride, chlorobenzene, dichlorobenzenes and trichlorobenzenes) are preferred. The resultant polymer is then recovered by evaporation of the solvent or by precipitation by a non solvent and subsequent filtration.

In order that the invention may be well understood the following Examples are given by way of illustration only.

Example 1

Into a 4-necked, 250 ml glass round-bottom flask, provided with a mechanical agitator, cooler and inlet pipe for nitrogen, there were charged, under a nitrogen stream, 2.65 g (13.05 mM) of terephthaloyl dichloride, 5.14 g (13.05 mM) of 3,3′-di(phenylethyl)-4,4′-dihydroxydiphenyl and 80 ml of 1,2,4-trichlorobenzene. The reaction mixture was kept under agitation and under nitrogen for 20 minutes at room temperature and thereafter the temperature was raised to 220°C. The whole was kept at this temperature for a further 18 hours until the evolution of HCl was practically complete.

The reaction mixture was then allowed to cool while maintaining agitation and the nitrogen flow. When the reaction mixture had reached 50°C, the gelatinous mass was poured into acetone and the precipitate which formed was filtered off. The resultant polymer was washed with acetone (twice) with hot water (twice) and acetone/methanol (twice). The final product was dried under vacuum for 3 hours at 190°C.

The dried polymer had a melting temperature (Tm) of 313°C and a crystallization temperature (Tc) of 282°C (the melting and crystallization temperatures were measured by D.S.C.-Differential Scanning Calorimetry -at a scanning rate of 20°C/minute for the Tm and of 10°C/minute for the Tc).

The inherent viscosity of the polymer was 1.25 dl/g (measured at 30°C in a solvent consisting of equal volumes of trifluoroacetic acid and methylene chloride and at a concentration of 2.5 g/litre).

The molten polymer was optically anisotropic as observed under a microscope under polarized light.

Example 2

Into a flask as used in Example 1 there were charged, under a nitrogen flow, 2.62 g (12.90 mM of terephthaloyl dichloride, 5.44 g (12.90 mM) of 3,3′-di(1-methyl-1-phenylethyl)-4,-4′-dihydroxydiphenyl and 85 ml of 1,2,4-trichlorbenzene. The mixture was kept under agitation and nitrogen for 20 minutes at room temperature and thereafter the temperature was raised to 220°C. The whole was kept at this temperature for 18 hours until the evolution of HCl was practically complete. The mixture was allowed to cool under stirring and nitrogen flow. When the reaction mixture had reached 50°C, the gelatinous mass was poured into acetone and the resultant precipitate was filtered off. The polymer obtained was washed with acetone (twice), with hot water (twice) and acetone/methanol (twice). The final product was dried under vacuum for 3 h at 190°C.

The dried polymer had an inherent viscosity of 0.70 dl/g (measured in pentafluorophenol at 60°C and at a concentration of 2.5 g/litre) and a crystallinity of 47% by volume.

The polymer, after having been heated for 6 hr at 310-320°C, when observed under a microscope equipped with heating plate, under polarized light, was optically anisotropic above the melting temperature (Tm) of 390°C.

Example 3

Into a 4-necked 100 ml glass round-bottomed flask, provided with a mechanical agitator, inlet pipe for nitrogen, there were charged, under a slight nitrogen flow, 4.23 g (30.62) mM of p-hydroxybenzoic acid, 2.54 g (15.29 mM) of 3,3′-diphenylethyl-4,4′-dihydroxydiphenyl, 0.30 g of trisodium phosphate dodecahydrate, 8 g of acetic anhydride and 20 g of diphenylsulphone. While keeping a slight nitrogen flow and under agitation, the reaction mixture was heated up to 140°C by means of a silicone oil bath. The reaction mixture was kept at this temperature for 1 hr and acetic acid began to distil. The temperature was then raised to 240°C and maintained at this value for a further hour. The temperature of the oil bath was raised to 270°C and kept thereat for about 40 minutes, to 300°C for 30 minutes and finally to 310°C for 1 hour and 30 minutes.

At the end of the polymerization reaction, after having cooled to room temperature under a slight nitrogen

flow, the solid mass which was obtained was finely milled.

The powder obtained was washed twice with acetone, twice with hot water and twice with acetone/methanol. The final product was dried under vacuum for 3 hours at 140°C.

The polymer obtained was amorphous, had a Tg (glass transition temperature) of 122°C and an inherent viscosity of 1.60 dl/g (measured at 30°C in a solvent consisting of equal volume of trifluoroacetic acid and methylene chloride at the concentration of 2.5 g/litre).

The polymer when examined under a polarized light microscope provided with heating plate appeared optically anisotropic in the fluid state.

**Claims**

1. Thermotropic liquid crystalline aromatic polyesters comprising:

(a) units derived from one or more essentially disubstituted diphenols of the formula:

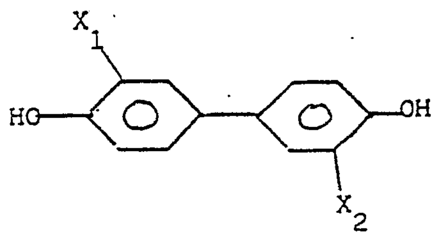

(1)

(wherein $X_1$ and $X_2$ are the same or different and each is a halogen atom, a $C_1$-$C_6$ alkyl group, an aralkyl group containing at least 7 carbon atoms, or a $C_6$-$C_{12}$ cycloalkyl group; and

(b) units derived from one or more dicarboxylic acids of the formula:

$HOOC - R_1 - COOH$ (2)

(wherein $R_1$ is a cycloalkyl group, or a simple, double or condensed aryl group containing from 6 to 18 carbon atoms optionally substituted within inert substituents); and, optionally,

(c) units derived from one or more hydroxyacids of the formula:

$HO - AR_1 (CH=CH) - COOH$ (3)

(wherein $Ar_1$ is a simple, double or condensed aryl group containing from 6 to 18 carbon atoms and optionally substituted inert substituents, and n is zero or 1); and/or

(d) units derived from diphenols of the formula:

$HO-Ar_2-OH$ (4)

(wherein $AR_2$ is a simple or condensed aryl group containing from 6 to 18 carbon atoms, optionally substituted by at least one group $X_1$ or $X_2$ as defined above); and/or

(e) units derived from one or more diphenols of the formula:

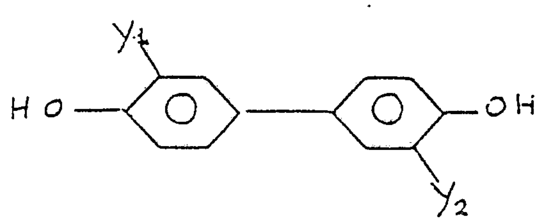

(5)

wherein $Y_1$ and $Y_2$ are the same or different and each is a hydrogen atom or an $C_6$-$C_{12}$ aryl group.

2. Polyesters according to claim 1, wherein the diphenols of formula (a) are in admixture with the corresponding mono-substituted derivatives.

3. Polyesters according to claim 2, wherein the mono-substituted derivatives form up to 50 mole% of the said mixture.

4. Polyesters according to any one of the preceding claims, wherein at least 90 mol% of the compounds of formulae (2), (3) and (4) have two functional groups such as to form polymeric chains having substantially coaxial or parallel orientations.

5. Polyesters according to any one of the preceding claims, wherein the diphenol of formula (1) is 3,3′-dichloro-4,4′-dihydroxydiphenyl, 3,3′-dibromo-4,4′-dihydroxydiphenyl, 3,3′-dimethyl-4,4′-dihydroxyduogebtkm 3m3′-diethyl-4,4′-dihydroxydiphenyl, 3,3′-di-t.butyl-4,4′-dihydroxydiphenyl, 3,3′-dicyclohexyl-4,4′-dihydroxydiphenyl, 3,3′-diphenylethyl-4,4′-dihydroxydiphenyl or 3,3′-di(1-methyl-1-phenylethyl)-4,4′-dihydroxydiphenyl; the dicarboxylic aromatic acid of formula (2) is terephthalic acid, chloro- or bromo- terephthalic acid, methylterephthalic acid, 1,4-naphthalendicarboxylic, 1,5-naphthalendicarboxylic, 2,6-naphthalendicarboxylic acids, 4,4′-diphenyldicarboxylic acid, 3,3′-dibromo-4,4′-diphenyldicarboxylic; the hydroxy acid of formula (3) is p-hydroxybenzoic acid, 3-chloro-4-hydroxybenzoic acid, 3-bromo-4-hydroxybenzoic acid, 3,5-dichloro-4-hydroxybenzoic acid, 3-methyl-4-hydroxybenzoic acid, 3-t.butyl-4-hydroxybenzoic acid, 4-hydroxy-1-naphthoic acid, 6-hydroxy-2-naphthoic acid, p(4-hydroxyphenyl)-benzoic acid or p-hydroxycinnamic acid; the aromatic diol of formula (4) is hydroquinone methyl-, ethyl-, propyl- , t-butyl-hydroquinone, phenyl hydroquinone, (1-phenylethyl)hydroquinone, 2,5-bis(phenylethyl hydroquinone, 2-(alpha-phenylisoproyl)hydroquinone, 2,5-bis(alpha-phenylisopropyl)hydroquinone, cyclohexylhydroquinone or 2,6-dihydroxynapthalene; and/or the diphenol formula (5) is 4,4′-dihydroxydiphenyl 3,3′-diphenyl-4,4-dihydroxydiphenyl or phenyl-4,4′-dihydroxyphenyl.

6. Polyesters according to any one of the preceding claims, wherein the molar ratios, d/a and e/a, of the units derived from the phenols of formulae (d) and (e) are to the units derived from the diphenol of formulae (a), from 0 to 1; and the molar ratio, c/d, of the units derived from the hydroxyacids of formula (c) to those derived from the acid of formula (b) is from 0 to 4.

7. Polyesters according to any of the preceding claims, having a inherent viscosity, as measured in a 1:1 mixture of trifluoracetic acid and methylene chloride at 30° C and at a concentration of 2.5 g/litre , of from 0.3 to 4 dl/g and having a melting temperature of from 200 to 400° C.

8. Polyesters according to any of the preceding claim in the form of fibres, films, shaped articles formed by injection or extrusion moulding, matrices for composite materials containing fibres or inorganic fillers, or admixtures with other polymers.